# EUROPÄISCHE PATENTSCHRIFT

(11) **EP 2 644 024 B1**
(45) Veröffentlichungstag und Bekanntmachung des Hinweises auf die Patenterteilung: **07.01.2015**
(21) Anmeldenummer: 13160834.1
(22) Anmeldetag: 25.03.2013
(51) Int. Cl.: A01G 27/06

(54) **Vorrichtung zum Aufnehmen eines Pflanzentopfs**
Device for holding a plant pot
Dispositif destiné à recevoir un pot de fleur

(30) Priorität: 30.03.2012 DE 102012205219
(43) Veröffentlichungstag der Anmeldung: 02.10.2013
(73) Patentinhaber: Klaus Schuler GmbH, 86473 Ziemetshausen (DE)
(72) Erfinder: Schuler, Klaus, 86476 Neuburg (DE); Welzhofer, Wolfgang, 86513 Ursberg (DE)
(74) Vertreter: Patentanwaltskanzlei WILHELM & BECK

(56) Entgegenhaltungen:
- EP-A1- 0 558 456
- EP-A1- 0 688 497
- EP-A1- 2 018 804
- FR-A5- 2 159 786
- US-A1- 2009 056 219
- US-A1- 2011 162 272

## Beschreibung

Die Erfindung betrifft eine Vorrichtung zum Aufnehmen eines Pflanzentopfes gemäß Patentanspruch 1.

Im Stand der Technik ist aus EP 2 018 804 A1 eine Vorrichtung zum Aufnehmen eines Pflanzentopfs bekannt. Die Vorrichtung weist ein Gehäuse auf, in dem ein Raum zur Aufnahme von Erde vorgesehen ist. Unter dem Raum zur Aufnahme der Erde ist ein weiterer Raum zur Aufnahme von Wasser vorgesehen. Zwischen dem Erdraum und dem Wasserraum sind Saugfäden vorgesehen, um das Wasser aus dem Wasserraum in den Erdraum zu führen. Das Gehäuse weist eine Öffnung über dem Erdraum auf. Die Öffnung wird von einem Randbereich umgeben. Im Randbereich ist ein Wasserstandsmelder angeordnet. Zudem ist im Randbereich eine Einfüllöffnung für den Wasserraum vorgesehen.

Aus US 2011/0162272 A1 ist ein Pflanzentopf bekannt, der einen oberen Aufnahmeraum zur Aufnahme von Erde und Pflanzen aufweist. Der obere Aufnahmeraum ist von einem unteren Aufnahmeraum durch eine gelochte Platte getrennt. Zudem sind im unteren Aufnahmeraum Röhren vorgesehen, die mit einem Wasservorrat in Verbindung stehen, und die bis zur Lochplatte nach oben geführt sind. Die Röhren sind mit Pflanzenerde gefüllt. Dadurch wird das Wasser aus dem Wasserreservoir über die Röhre nach oben gesaugt und durch die Löcher der Platte in den oberen Aufnahmeraum weiter geführt. Der Pflanztopf weist zudem eine Füllstandsanzeige auf, die in Form eines Rohres ausgebildet ist, wobei das Rohr seitlich am Pflanzenbehälter angeordnet ist und seitlich neben dem Pflanzenbehälter eine sichtbare Anzeige zur Überwachung des Füllstandes aufweist.

Aus EP 0 558 456 A1 ist ein Behälter zur gesteuerten Abgabe von Flüssigkeiten an einen Verbraucher bekannt. Bei diesem Behälter wird der Flüssigkeitsspiegel praktisch immer konstant gehalten, so dass keine Gefahr einer Versumpfung der Pflanze im Topf besteht. Wird von der Pflanze Flüssigkeit aufgenommen, so sinkt zwar der Flüssigkeitsspiegel etwas ab, so dass etwas Luft in den Tank durch die Öffnung eindringen kann. Es tritt dann durch die Öffnung etwas Flüssigkeit aus, der Flüssigkeitsspiegel steigt an und die Zufuhr von Luft bricht ab. Das hydrostatische Gleichgewicht ist dann wieder hergestellt, so dass keine Flüssigkeit mehr austritt, bis sich nach weiterem Flüssigkeitsverbrauch das Spiel wiederholt. Zum Nachfüllen muss der Verschlussdeckel abgenommen werden, so dass das Ventil schließt und ein Auslaufen des Tanks verhindert wird. Wird der Verschlussdeckel wieder eingesetzt, so wird durch dessen Betätigungsglied das Ventil wieder geöffnet.

Die Aufgabe der Erfindung besteht darin, eine verbesserte Vorrichtung zur Aufnahme eines Pflanzentopfs bereitzustellen. Die Aufgabe der Erfindung wird durch die Vorrichtung gemäß Patentanspruch 1 gelöst.

Weitere vorteilhafte Ausführungsformen der Erfindung sind in den abhängigen Ansprüchen angegeben.

Die erfindungsgemäße Vorrichtung weist den Vorteil auf, dass die Vorrichtung aus einem kostengünstigen Material hergestellt werden kann, da die Vorrichtung bis auf den Randbereich, der die Aufnahmeöffnung für die Aufnahe des Pflanzentopfs umgrenzt, mit Erde überbaut werden kann. Damit ist der mit Erde überbaute Teil gegen eine Einwirkung von UV-Strahlung geschützt. Die Pflanzentöpfe sind in der Weise ausgebildet, dass sie in die Aufnahmeöffnung eingehängt werden, wobei ein Randbereich des Pflanzentopfes den Rand der Aufnahmeöffnung überdeckt. Somit ist auch dieser Bereich gegen die Einwirkung von UV-Strahlung geschützt. Die einzigen Teile, die im verbauten Zustand der Vorrichtung aus dem Erdbereich ragen, sind die Füllstandsanzeige und die Einfüllöffnung.

In einer weiteren Ausführungsform weist die Aufnahmeöffnung einen umlaufenden Rand auf, so dass ein Pflanzentopf umlaufend auf den Rand aufgelegt werden kann. Damit ist eine einfache Halterung des Pflanzentopfs durch das Auflegen des Randbereichs des Pflanzentopfs auf den umlaufenden Rand der Aufnahmeöffnung möglich.

Durch den gegenüber dem Randbereich tiefer angeordneten Seitenbereich, der mit einem Deckel abgedeckt ist, wird ein umlaufender Rand der Aufnahmeöffnung bereitgestellt. Zudem kann der Seitenbereich mit Erde überfüllt werden, so dass nur die Einfüllöffnung und die Füllstandsanzeige sichtbar sind.

In einer weiteren Ausführungsform weist der Deckel einen Teilabschnitt der Seitenwand auf, wobei der Teilabschnitt in eine seitliche Öffnung der Seitenwand des Gehäuses eingelegt ist. Dadurch sind eine einfache Ausbildung des Deckels und zugleich eine einfache Ausbildung eines umlaufenden Randbereichs der Aufnahmeöffnung möglich.

In einer weiteren Ausführungsform weist der Deckel im Bereich des Seitenraums eine seitliche Lasche auf, die nach unten gebogen ist, wobei die nach unten gebogene Lasche die Seitenwand des Seitenraums seitlich überdeckt. Damit wird ein Einfüllen von Erde in den Seitenraum vermieden.

In einer weiteren Ausführungsform weist der Teilabschnitt seitliche Laschen auf, wobei die seitlichen Laschen die Seitenwand des Hauptraums hintergreifen. Somit kann eine sichere und zuverlässige Befestigung des Deckels am Gehäuse erreicht werden. Weiterhin wird durch das Hintergreifen der Seitenwand ein umlaufender Rand der Aufnahmeöffnung durch ein einfaches Einschieben des Teilabschnitts in die Öffnung der Seitenwand ermöglicht.

In einer weiteren Ausführungsform sind die Einfüllöffnung und die Füllstandsanzeige nach oben bis über die Höhe des oberen Rands der Seitenwand des Hauptraums geführt. Somit ist auch im eingebauten Zustand sowohl die Füllhöhe des Wasserstands sichtbar, als auch ein Einfüllen ohne ein Freigraben der Einfüllöffnung möglich.

In einer weiteren Ausführungsform ist eine Seitenwand des Gehäuses ausgehend vom Boden seitlich nach außen in Richtung oben geneigt ausgebildet, so dass mehrere Gehäuse ineinander stapelbar sind. Damit können auf engstem Raum mehrere Gehäuse gestapelt und auch transportiert werden. Die Neigung der Seitenwände liegt beispielsweise im Bereich von 0,5 bis 5°.

In einer weiteren Ausführungsform weist das Gehäuse in einer vorgegebenen Höhe wenigstens eine Überlauföffnung auf. Damit wird sichergestellt, dass bei Regen ein Auffüllen des Gehäuses mit Wasser bis in den Pflanzentopf vermieden wird, indem Regenwasser automatisch über die Überlauföffnung abfließen kann.

In einer weiteren Ausführungsform ist das Gehäuse aus einem für eine UV-Strahlung empfindlicheren Material als der Deckel ausgebildet. Damit können Kosten eingespart werden.

In einer weiteren Ausführungsform ist die Seitenwand des Hauptraumes durch zwei Teilzylinderringe gebildet, wobei die zwei Teilzylinderringe über eine Teilringfläche miteinander verbunden sind, wobei die Teilringfläche wenigstens teilweise senkrecht zu einer Mittenachse der Teilzylinderringe angeordnet ist. Dadurch wird eine stabile und einfache Fertigung ermöglicht.

In einer weiteren Ausführungsform ist eine Überlauföffnung in der Teilringfläche angeordnet. Durch die Teilringfläche ist die Ausbildung der Überlauföffnung einfach möglich.

In einer weiteren Ausführungsform weist der Boden Stege zur Versteifung auf, wobei die Stege insbesondere in Form eines Versteifungskreuzes ausgebildet sind. Dadurch wird ein besonders stabiler Boden ermöglicht.

In einer weiteren Ausführungsform weist der Einfüllstutzen eine von der Kreisform abweichende Querschnittsfläche, insbesondere eine Rechteckform auf. Dies ermöglicht ein schnelles Einfüllen von Wasser mit einem Rohr, wobei über seitliche Freiräume zwischen Rohr und Einfüllstutzen entweichen kann.

In einer weiteren Ausführungsform ist der Deckel über einen weiteren Steg gegen ein Abschieben an der Seitenwand des Seitenraumes gesichert, wobei der Deckel ein Seitenwandteil aufweist, das gegen eine Außenfläche der Seitenwand des Hauptraumes dichtend angelegt ist.

Die Erfindung wird im Folgenden anhand der Figuren näher erläutert. Es zeigen:
Figur 1 eine schematische Seitenansicht der Vorrichtung;
Figur 2 eine schematische Draufsicht auf die Vorrichtung;
Figur 3 eine weitere Seitenansicht;
Figur 4 eine erste Seitenansicht des Deckels;
Figur 5 eine zweite Seitenansicht des Deckels;
Figur 6 eine Draufsicht auf den Deckel;
Figuren 7 bis 10 zeigen eine weitere Ausführungsform eines Gehäuses;
Figuren 11 bis 13 zeigen eine weitere Ausführungsform eines Deckels; und
Figur 14 zeigt eine weitere Ausführungsform eines Deckels.

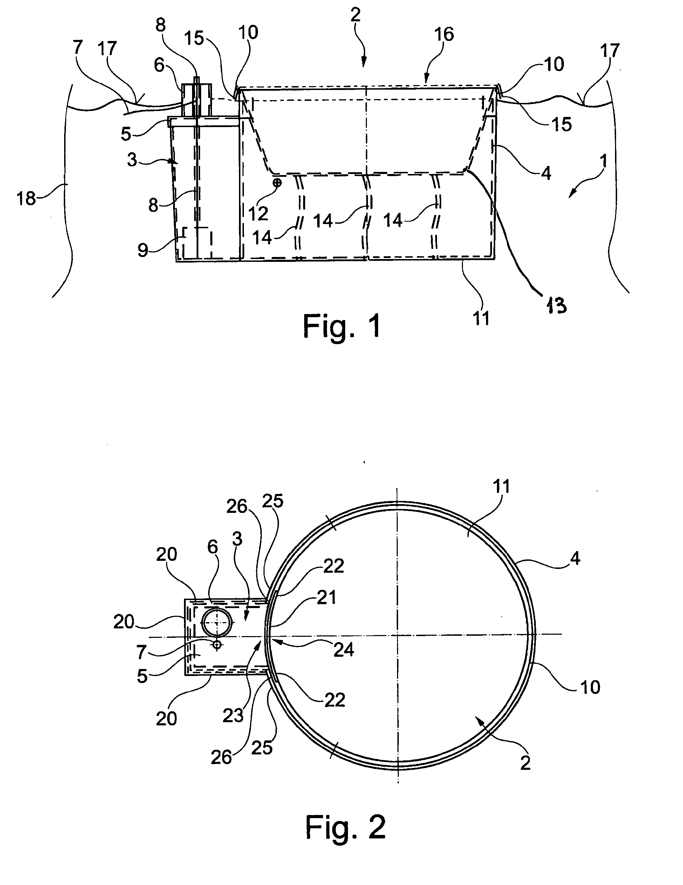

Figur 1 zeigt eine schematische Seitenansicht eines Gehäuses 1, das einen Hauptraum 2 und einen Seitenraum 3 umfasst. Der Hauptraum 2 und der Seitenraum 3 sind miteinander verbunden. Der Hauptraum 2 und der Seitenraum 3 dienen zur Aufnahme von Wasser. Der Hauptraum 2 wird von einer Seitenwand 4 des Gehäuses 1 umgeben. Zudem wird der Seitenraum 3 ebenfalls von der Seitenwand 20 des Gehäuses umgrenzt. Die Seitenwand 4 ist im Bereich des Hauptraums 2 höher ausgebildet als im Bereich des Seitenraums 3. Der Seitenraum 3 ist von einem Deckel 5 abgedeckt. Der Deckel 5 weist einen Einfüllstutzen 6 und ein Führungsrohr 7 für eine Füllstandsanzeige auf. Im Führungsrohr 7 ist ein Anzeigestab 8 beweglich gelagert, an dessen unteren Ende ein Schwimmkörper 9 befestigt ist. Abhängig vom Füllstand des Gehäuses 1 schwimmt der Schwimmkörper 9 in verschiedenen Positionen, so dass auch das obere Ende des Anzeigestabs 8 unterschiedlich weist aus dem Führungsrohr 7 nach oben herausragt. In dem dargestellten Ausführungsbeispiel sind der Einfüllstutzen 6 und das Führungsrohr 7 gleich lang nach oben aus dem Deckel 5 herausgeführt. Der Einfüllstutzen 6 und das Führungsrohr 7 enden oberhalb eines Randbereichs 10, der den Hauptraum 2 begrenzt. Die Seitenwand 4 ist nach unten durch einen Boden 11 abgeschlossen.

In der Seitenwand 4 ist wenigstens eine Überlauföffnung 12 eingebracht. In das Gehäuse 1 ist gestrichelt ein Pflanzentopf 13 dargestellt. Der Pflanzentopf 13 weist im Boden Öffnungen auf, durch die saugfähige Fäden 14 nach unten zum Boden 11 geführt sind. Zudem weist der Pflanzentopf 13 eine ringförmig umlaufende, nach unten gebogene Umlaufkante 15 auf. Der Pflanzentopf 13 ist in eine Aufnahmeöffnung 16 des Gehäuses eingestellt, wobei die Umlaufkante 15 den umlaufenden Randbereich 10 der Aufnahmeöffnung 16 überdeckt. Weiterhin ist in Figur 1 eine Oberfläche 17 einer Erdschicht 18 dargestellt, mit der die Vorrichtung überbaut werden kann. Somit ist aus der Figur 1 ersichtlich, dass von dem Gehäuse 1 nur der Einfüllstützen 6 und das Führungsrohr 7 mit dem Anzeigestab 8 sichtbar sind. Die Seitenwand 4 des Gehäuses 1 ist entweder mit einer Erdschicht 18 überdeckt oder vom Pflanzentopf 13 abgedeckt. Der Deckel 5 ist ebenfalls von der Erdschicht 18 abgedeckt. Somit sind nur der Pflanzentopf 13 und der Einfüllstutzen 6 und das Führungsrohr 7 einer UV-Strahlung ausgesetzt.

Figur 2 zeigt die Vorrichtung von oben. Die Seitenwand 4, die den Hauptraum 2 umgibt, ist bis auf den Bereich, in dem der Hauptraum 2 in den Seitenraum 3 übergeht, kreisförmig ausgebildet. Die Seitenwand 4 ist ausgehend vom oberen Randbereich 10 in Richtung auf den Boden 11 nach innen geneigt ausgebildet. Die Neigung ist konzentrisch in Bezug auf einen Kreismittelpunkt 19. Die Neigung kann zwischen 0,5 und beispielsweise 5° liegen. Üblicherweise liegt die Neigung im Bereich von 1°.

Die Seitenwand 4 begrenzt den Seitenraum 3 auf drei Seiten. Der Seitenraum 3 weist im Querschnitt eine Rechteckform auf, die in die Kreisform des Hauptraums 2 einmündet. Die drei Seiten der Seitenwand 4 sind vorzugsweise ausgehend von einem oberen Randbereich in Richtung auf den Boden 11 jeweils nach innen geneigt angeordnet. Die Neigung liegt beispielsweise zwischen 0,5 und 5%. Ein üblicher Wert ist im Bereich von 1%. Abhängig von der gewählten Ausführungsform kann anstelle eines im Querschnitt rechteckigen Seitenraums 3 auch eine andere Querschnittsform, insbesondere eine Kreisform gewählt werden.

In Figur 2 ist der Deckel 5 mit dem Einfüllstutzen 6 und dem Führungsrohr 7 dargestellt. Auf den Anzeigestab 8 wurde verzichtet. Aus Figur 2 ist erkennbar, dass der Deckel 5 ein Seitenwandteil 21 aufweist, das mit seitlichen Laschen 22 die Seitenwand 4 angrenzend an den Seitenraum 3 hintergreift. Das Seitenwandteil 21 ist in einem Ausschnitt 23 der Seitenwand 4 eingebracht. Der Ausschnitt 23 ist im Übergangsbereich 24 zwischen dem Hauptraum 2 und dem Seitenraum 3 ausgebildet. Der Ausschnitt 23 wird von zwei parallel angeordneten Seitenrändern 25 des Gehäuses 1 gebildet. Zudem weist der Deckel 5 Einkerbungen 26 auf, in die die Seitenränder 25 eingreifen.

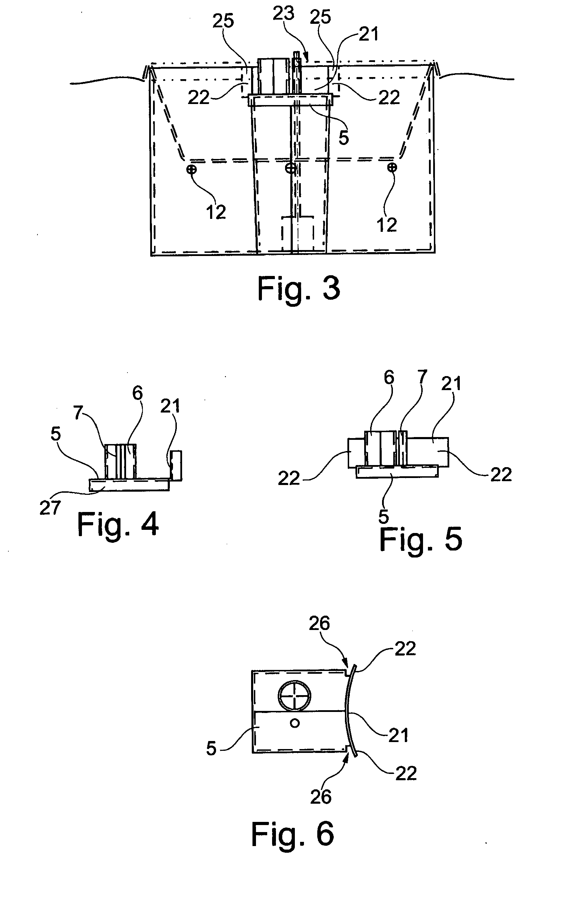

Figur 3 zeigt eine schematische Seitenansicht der Vorrichtung, wobei die Laschen 22 des Seitenwandteils 21 gestrichelt dargestellt sind. Die Laschen 22 hintergreifen die gegenüberliegenden Seitenränder 25 der Seitenwand 4 oberhalb des Deckels 5. Der Deckel 5 weist einen auf den drei Seiten der zweiten Seitenwand 20 überdeckenden Deckelrand 27 auf. Dadurch wird die Öffnung des Seitenraums 3 mit dem Deckel 5 auch seitlich abgedeckt, so dass keine überfüllte Erde in den Seitenraum 3 fallen kann.

Figur 4 zeigt den Deckel 5 in einer ersten Seitenansicht. Dabei ist zu erkennen, dass das Seitenwandteil 21 im rechten Winkel zur Grundfläche des Deckels 5 angeordnet ist. Zudem ist die teilkreisförmige Biegung des Seitenwandteils 21 erkennbar.

Figur 5 zeigt den Deckel 5 in einer zweiten Ansicht, in der erkennbar ist, dass die seitlichen Laschen 22 des Seitenwandteils 21 seitlich über den Deckel 5 hinausragen.

Figur 6 zeigt den Deckel 5 von oben, wobei die Einkerbungen 26 zur Aufnahme der Seitenränder 25 der Seitenwand 4 deutlich erkennbar sind. Zudem weist das Seitenwandteil 21 im Querschnitt eine ähnliche oder gleiche Form wie die Seitenwand 4 des Hauptraums 2 auf. Durch den seitlich tiefer angeordneten

Deckel 5 und die Ausbildung des Seitenwandteils 21 wird ein umlaufender geschlossener Auflagerand für den Pflanzentopf 13 bereitgestellt. Zudem ist die Montage des Deckels 5 einfach und sicher auszuführen. Aufgrund der Einkerbungen 26 und aufgrund der Laschen 22 wird der Deckel 5 am Gehäuse 1 in der gewünschten Position gehalten.

Der Deckelrand 27 besteht im Wesentlichen aus drei jeweils im rechten Winkel zueinander angeordneten und im rechten Winkel zum Deckel 5 abgewinkelte Seitenbereiche des Deckels 5.

Abhängig von der gewählten Ausführungsform kann der Deckel 5 aus einem gegen UV-Strahlung stabileren Material als das Gehäuse 1 gebildet werden. Damit ist sichergestellt, dass der Einfüllstutzen 6 und das Führungsrohr 7, das im verbauten Zustand aus der Erdschicht 18 herausragt, durch UV-Strahlung nicht zerstört wird.

Der obere Rand des Seitenwandteils 21 ist auf gleicher Höhe wie der obere Rand der Seitenwand 4 im Bereich des Hauptraums 2 angeordnet.

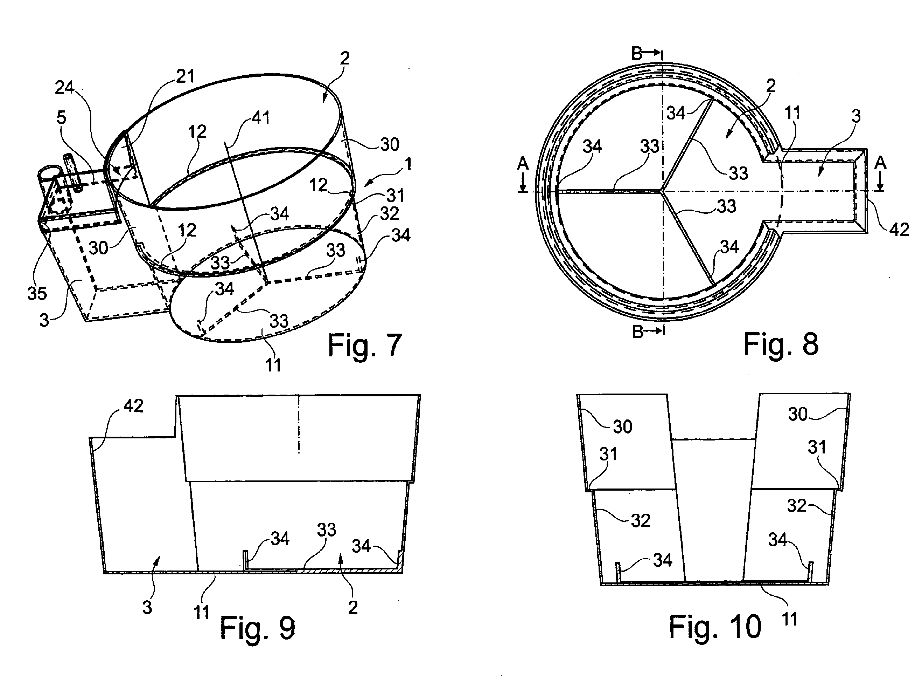

Figur 7 zeigt eine weitere Ausführungsform der Vorrichtung, wobei das Gehäuse 1 im Bereich des Hauptraums 2 eine abgestufte und konisch in Richtung auf den Boden zulaufende Zylinderform aufweist. Ein erster oberer Zylinderring 30 ist konisch verjüngend in Richtung auf den Boden 11 ausgebildet. Der erste Zylinderring 30 geht über eine Ringfläche 31 in einen zweiten Zylinderring 32 über, der mit dem Boden 11 verbunden ist. Die Ringfläche 31 ist vorzugsweise senkrecht zu einer Mittensymmetrieachse 41 des ersten und des zweiten Zylinderrings 30, 32 angeordnet. In der Ringfläche 31 sind Überlauföffnungen 12 angeordnet. Der zweite Zylinderring 32 ist ebenfalls konisch in Richtung auf den Boden 11 verjüngend ausgebildet. Durch die Anordnung der Ringfläche 31 ist eine einfache und kostengünstige Herstellung der Überlauföffnungen 12 möglich. Der erste und der zweite Zylinderring 30, 32 und die Ringfläche 31 weisen im Übergangsbereich 24 zum Seitenraum 3 entsprechende Öffnungen auf, so dass der erste und der zweite Zylinderring 30, 32 und die Ringfläche 31 tatsächlich nur Teilringe darstellen.

Weiterhin weist das Gehäuse 1 am Boden 11 Stege 33 auf, die ausgehend vom zweiten Zylinderring 32 radial symmetrisch in Richtung auf die Mitte des Bodens 11 geführt sind. Die Stege 33 stellen ein dreischenkliges Verstärkungskreuz dar. Die Stege 33 weisen jeweils am zweiten Zylinderring 32 einen Schenkel 34 auf, der ausgehend vom Steg 33 eine festgelegte Strecke parallel zur Mittenachse 41 der Zylinderringe 30, 32 und entlang des zweiten Zylinderrings 32 geführt ist.

Das Gehäuse 1 ist beispielsweise aus einem Kunststoff gefertigt, wobei die Stege 33 trotz einer dünnen Seitenwand 4 und eines dünnen Bodens 11 eine erhöhte Stabilität des Gehäuses 1 ermöglichen.

In Figur 7 ist eine weitere Ausführungsform des Deckels 5 dargestellt, wobei der Deckel 5 ein zweites Wandteil 21 aufweist, das von außen an den ersten Zylinderring 30 mit seitlichen Randbereichen angelehnt ist. Zudem ist der Deckel 5 über einen weiteren Steg 35 gegen ein radial nach außen gerichtetes Verschieben gesichert.

Figur 8 zeigt eine Ansicht auf das Gehäuse 1 der Figur 7 ohne Deckel 5. Auch in dieser Ausführungsform sind die Seitenwände des Seitenraums 3 in Richtung auf den Boden 11 nach innen geneigt angeordnet.

Figur 9 zeigt einen Querschnitt A-A der Figur 8. Dabei ist deutlich die im Wesentlichen senkrecht zur Mittenachse 36 angeordnete Ringfläche 31 zu erkennen.

Figur 10 zeigt einen Querschnitt B-B der Figur 8.

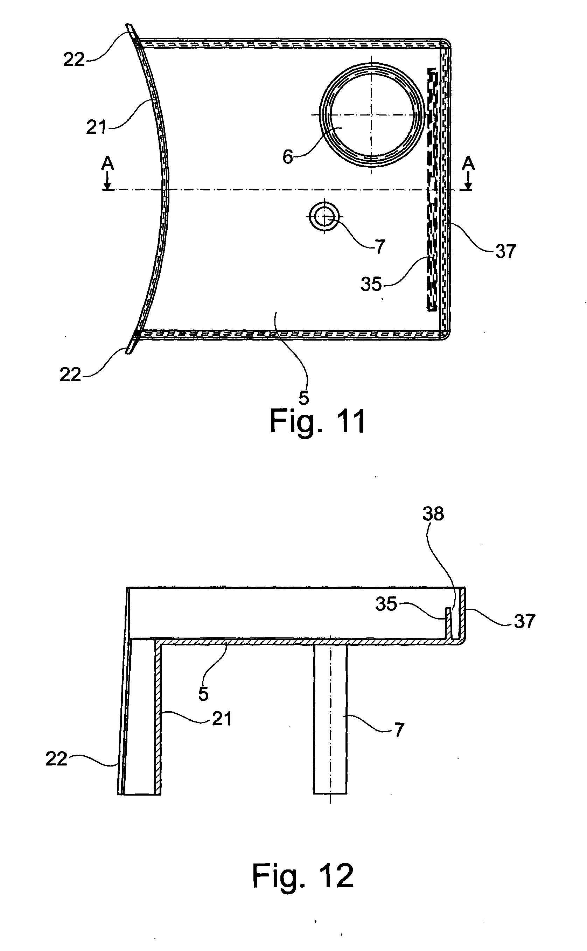

Figur 11 zeigt eine Aufsicht auf den Deckel 5 der Figur 7, wobei der weitere Steg 35 gestrichelt dargestellt ist. Das Seitenwandteil 21 ist gemäß der konisch geneigten Anordnung des ersten Zylinderrings 30 ausgebildet und weist seitlich zum Deckel 5 jeweils Laschen 22 auf, die im montierten Zustand an entsprechenden Seitenflächen des ersten Zylinderrings 30 anliegen.

Figur 12 zeigt einen Querschnitt A-A der Figur 11. Dabei ist der weitere Steg 35 dargestellt, der mit einer hinteren Seitenkante 37 des Deckels 5 eine Nut 38 bildet, in die eine hintere Seite 42 des Seitenraums 3 nach der Montage des Deckels 5 auf den Seitenraum 3 eingreift.

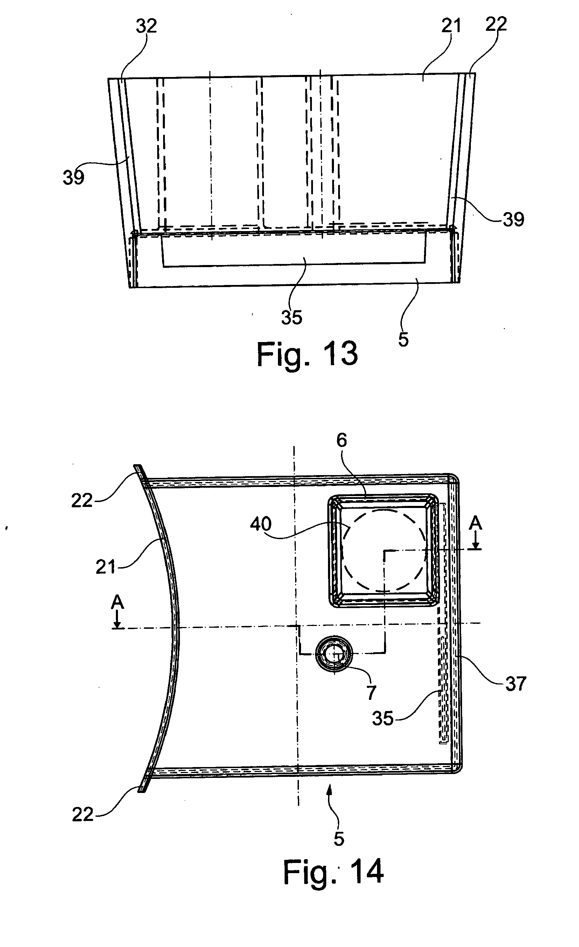

Figur 13 zeigt einen Blick auf das Seitenwandteil 21 des Deckels 5, wobei im Bereich der Laschen 22 Dichtflächen 39 zur dichtenden Anlage an den ersten Zylinderring 30 vorgesehen sind.

Figur 14 zeigt eine weitere Ausführungsform des Deckels 5 der Figur 11, wobei der Deckel 5 entsprechend der Ausführungsform der Figur 11 ausgebildet ist. Im Gegensatz zu der Ausführungsform der Figur 11 weist der Deckel 5 der Ausführungsform der Figur 14 einen Einfüllstutzen 6 auf, der im Querschnitt nicht kreisförmig, sondern rechteckig ausgebildet ist. Dadurch wird beim Einfüllen von Wasser in den Einfüllstutzen 6 mit Hilfe eines zylinderförmigen Rohrs 40, das gestrichelt in Figur 14 dargestellt ist, in den Eckbereichen des Einfüllstützens 6 Freiraum zum Entweichen von Luft bereitgestellt. Damit kann das Einfüllen von Wasser in die Vorrichtung schneller erfolgen.

### Bezugszeichenliste

- 1: Gehäuse
- 2: Hauptraum
- 3: Seitenraum
- 4: Seitenwand
- 5: Deckel
- 6: Einfüllstutzen
- 7: Führungsrohr
- 8: Anzeigestab
- 9: Schwimmkörper

- 10: Randbereich
- 11: Boden
- 12: Überlauföffnung
- 13: Pflanzentopf
- 14: Faden
- 15: Umlaufkante
- 16: Aufnahmeöffnung
- 17: Oberfläche
- 18: Erdschicht
- 19: Kreismittelpunkt

- 20: zweite Seitenwand
- 21: Seitenwandteil
- 22: Lasche
- 23: Ausschnitt
- 24: Übergangsbereich
- 25: Seitenrand
- 26: Einkerbung
- 27: Deckelrand

- 30: erster Zylinderring
- 31: Ringfläche
- 32: zweiter Zylinderring
- 33: Steg
- 34: Schenkel
- 35: weiterer Steg
- 37: hintere Seitenkante
- 38: Nut
- 39: Dichtfläche

- 40: Rohr
- 41: Mittensymmetrieachse
- 42: Seite

## Patentansprüche

1. Vorrichtung zum Aufnehmen eines Pflanzentopfs und zur Versorgung des Pflanzentopfs mit Wasser, wobei die Vorrichtung ein Gehäuse (1) aufweist, wobei das Gehäuse einen Boden (11) und eine Seitenwand (4, 20) umfasst, um Wasser aufzunehmen, wobei das Gehäuse einen Hauptraum (2) und einen Seitenraum (3) aufweist, wobei der Hauptraum und der Seitenraum miteinander verbunden und nach oben hin offen sind, wobei der Hauptraum eine Aufnahmeöffnung (16) für die Aufnahme eines Pflanzentopfes (13) aufweist, wobei die Seitenwand (20), die den Seitenraum begrenzt niedriger ausgebildet ist als die Seitenwand (4), die den Hauptraum begrenzt, wobei der Seitenraum mit einem Deckel (5) bedeckt ist, wobei aus dem Deckel eine Einfüllöffnung (6) und eine Füllstandsanzeige (8) herausragen.

2. Vorrichtung nach Anspruch 1, wobei die Aufnahmeöffnung von einem umlaufenden Rand (10) der Seitenwand begrenzt wird, so dass ein Pflanzentopf umlaufend auf den Rand aufgelegt werden kann.

3. Vorrichtung nach einem der Ansprüche 1 oder 2, wobei der Deckel einen Teilabschnitt (21) der Seitenwand aufweist, die den Hauptraum begrenzt, wobei der Teilabschnitt in eine seitliche Öffnung der Seitenwand des Gehäuses eingelegt ist.

4. Vorrichtung nach einem der vorhergehenden Ansprüche, wobei der Deckel im Bereich des Seitenraumes eine seitliche Lasche (22) aufweist, die nach unten gebogen ist und die Seitenwand des Seitenraumes seitlich überdeckt.

5. Vorrichtung nach Anspruch 3, wobei der Teilabschnitt seitliche Laschen (22) aufweist, wobei die seitlichen Laschen die Seitenwand des Hauptraumes hintergreifen.

6. Vorrichtung nach einem der vorhergehenden Ansprüche, wobei die Einfüllöffnung und die Füllstandsanzeige nach oben bis über die Höhe eines oberen Randes (10) der Seitenwand des Hauptraumes geführt sind.

7. Vorrichtung nach einem der vorhergehenden Ansprüche, wobei die Seitenwand des Gehäuses von unten nach oben seitlich nach außen geneigt ausgebildet ist, so dass mehrere Gehäuse ineinander stapelbar sind.

8. Vorrichtung nach Anspruch 7, wobei die Neigung der Seitenwand im Bereich von 0,5 bis 5° ausgebildet ist.

9. Vorrichtung nach einem der vorhergehenden Ansprüche, wobei das Gehäuse in einer vorgegebenen Höhe wenigstens eine Überlauföffnung (12) aufweist.

10. Vorrichtung nach einem der vorhergehenden Ansprüche, wobei das Gehäuse aus einem für eine UV-Strahlung empfindlicheren Material als der Deckel gebildet ist.

11. Vorrichtung nach einem der Ansprüche 1 bis 10, wobei die Seitenwand des Hauptraumes durch zwei Teilzylinderringe (30, 32) gebildet ist, wobei die zwei Teilzylinderringe über eine Teilringfläche miteinander verbunden sind, wobei die Teilringfläche wenigstens teilweise senkrecht zu einer Mittenachse der Teilzylinderringe angeordnet ist.

12. Vorrichtung nach Anspruch 11, wobei eine Überlauföffnung (12) in der Teilringfläche angeordnet ist.

13. Vorrichtung nach einem der vorhergehenden Ansprüche, wobei der Boden Stege (33) zur Versteifung aufweist, wobei die Stege insbesondere in Form eines Versteifungskreuzes ausgebildet sind.

14. Vorrichtung nach einem der vorhergehenden Ansprüche, wobei der Einfüllstutzen eine von der Kreisform abweichende Querschnittsfläche aufweist, insbesondere rechteckförmig ist.

15. Vorrichtung nach einem der Ansprüche 1 und 2 und 6 bis 14, wobei der Deckel über einen weiteren Steg (35) gegen ein Abschieben an der Seitenwand des Seitenraumes gesichert ist, wobei der Deckel ein Seitenwandteil aufweist, das gegen eine Außenfläche der Seitenwand des Hauptraumes dichtend angelegt ist.

## Claims

1. Device for receiving a plant pot and for supplying the plant pot with water, wherein the device has a housing (1), wherein the housing comprises a base (11) and a side wall (4, 20), for the purpose of receiving water, wherein the housing has a main chamber (2) and a side chamber (3), wherein the main chamber and the side chamber are connected to one another and are open in the upward direction, wherein the main chamber has a receiving opening (16) for receiving a plant pot (13), wherein the side wall (20), which delimits the side chamber, is designed to be lower than the side wall (4), which delimits the main chamber, wherein the side chamber is covered by a lid (5), wherein an introduction opening (6) and a filling-level indicator (8) project out of the lid.

2. Device according to Claim 1, wherein the receiving opening is delimited by an encircling periphery (10) of the side wall, and therefore a plant pot can be positioned to rest all the way around the periphery.

3. Device according to either of Claims 1 and 2, wherein the lid has a sub-portion (21) of the side wall which delimits the main chamber, wherein the sub-portion is positioned in a lateral opening of the side wall of the housing.

4. Device according to one of the preceding claims, wherein the lid, in the region of the side chamber, has a lateral lug (22), which is bent downwards and covers over the side wall of the side chamber laterally.

5. Device according to Claim 3, wherein the sub-portion has lateral lugs (22), wherein the lateral lugs engage behind the side wall of the main chamber.

6. Device according to one of the preceding claims, wherein the introduction opening and the filling-level indicator are routed upwards beyond the height of an upper periphery (10) of the side wall of the main chamber.

7. Device according to one of the preceding claims, wherein the side wall of the housing is deigned to be inclined laterally outwards from bottom to top, and therefore a plurality of housings can be stacked one inside the other.

8. Device according to Claim 7, wherein the inclination of the side wall ranges from 0.5 to 5°.

9. Device according to one of the preceding claims, wherein the housing, at a predetermined height, has at least one overflow opening (12).

10. Device according to one of the preceding claims, wherein the material of the housing is more sensitive to UV radiation than that of the cover.

11. Device according to one of Claims 1 to 10, wherein the side wall of the main chamber is formed by two part-cylinder rings (30, 32), wherein the two part-cylinder rings are connected to one another via a part-annular surface, wherein the part-annular surface is arranged at least partially perpendicularly to a centre axis of the part-cylinder ring.

12. Device according to Claim 11, wherein an overflow opening (12) is arranged in the part-annular surface.

13. Device according to one of the preceding claims, wherein the base has reinforcing crosspieces (33), wherein the crosspieces are designed, in particular, in the form of a reinforcing cross.

14. Device according to one of the preceding claims, wherein the introduction nozzle has a non-circular cross-sectional surface area, in particular is rectangular.

15. Device according to one of Claims 1 and 2 and 6 to 14, wherein the lid is secured, via a further crosspiece (35), from being pushed off from the side wall of the side chamber, wherein the lid has a side-wall part which is positioned with sealing action against an outer surface of the side wall of the main chamber.

## Revendications

1. Dispositif destiné à recevoir un pot de fleurs et à fournir de l'eau au pot de fleurs, le dispositif présentant un boîtier (1), le boîtier comprenant un fond (11) et une paroi latérale (4, 20), afin de recevoir l'eau, le boîtier présentant un espace principal (2) et un espace latéral (3), l'espace principal et l'espace latéral étant connectés l'un à l'autre et étant ouverts vers le haut, l'espace principal présentant une ouverture de réception (16) pour recevoir un pot de fleurs (13), la paroi latérale (20) qui limite l'espace latéral étant réalisée de manière plus basse que la paroi latérale (4) qui limite l'espace principal, l'espace latéral étant recouvert d'un couvercle (5), une ouverture de remplissage (6) et une indication de niveau (8) dépassant du couvercle.

2. Dispositif selon la revendication 1, dans lequel l'ouverture de réception est limitée par un bord périphérique (10) de la paroi latérale, de sorte qu'un pot de fleurs puisse être placé tout autour sur le bord.

3. Dispositif selon l'une quelconque des revendications 1 ou 2, dans lequel le couvercle présente une portion partielle (21) de la paroi latérale qui limite l'espace principal, la portion partielle étant introduite dans une ouverture latérale de la paroi latérale du boîtier.

4. Dispositif selon l'une quelconque des revendications précédentes, dans lequel le couvercle, dans la région de l'espace latéral, présente une patte latérale (22) qui est recourbée vers le bas et qui recouvre latéralement la paroi latérale de l'espace latéral.

5. Dispositif selon la revendication 3, dans lequel la portion partielle présente des pattes latérales (22), les pattes latérales venant en prise par l'arrière avec la paroi latérale de l'espace principal.

6. Dispositif selon l'une quelconque des revendications précédentes, dans lequel l'ouverture de remplissage et l'indication de niveau sont guidés vers le haut jusqu'au-dessus de la hauteur d'un bord supérieur (10) de la paroi latérale de l'espace principal.

7. Dispositif selon l'une quelconque des revendications précédentes, dans lequel la paroi latérale du boîtier est réalisée de manière inclinée depuis le bas vers le haut latéralement vers l'extérieur, de telle sorte que plusieurs boîtiers puissent être empilés les uns dans les autres.

8. Dispositif selon la revendication 7, dans lequel l'inclinaison de la paroi latérale est comprise dans la plage de 0,5 à 5°.

9. Dispositif selon l'une quelconque des revendications précédentes, dans lequel le boîtier présente au moins une ouverture de débordement (12) à une hauteur prédéfinie.

10. Dispositif selon l'une quelconque des revendications précédentes, dans lequel le boîtier est formé à partir d'un matériau plus sensible aux rayonnements UV que le couvercle.

11. Dispositif selon l'une quelconque des revendications 1 à 10, dans lequel la paroi latérale de l'espace principal est formée par deux bagues cylindriques partielles (30, 32), les deux bagues cylindriques partielles étant connectées l'une à l'autre par le biais d'une surface annulaire partielle, la surface annulaire partielle étant disposée au moins en partie perpendiculairement à un axe médian des bagues cylindriques partielles.

12. Dispositif selon la revendication 11, dans lequel une ouverture de débordement (12) est disposée dans la surface annulaire partielle.

13. Dispositif selon l'une quelconque des revendications précédentes, dans lequel le fond présente des nervures (33) de renforcement, les nervures étant réalisées notamment sous la forme d'une croix de renforcement.

14. Dispositif selon l'une quelconque des revendications précédentes, dans lequel la tubulure de remplissage présente une surface en section transversale s'écartant de la forme circulaire, notamment a une forme rectangulaire.

15. Dispositif selon l'une quelconque des revendications 1 et 2 et 6 à 14, dans lequel le couvercle est fixé par le biais d'une nervure supplémentaire (35) pour empêcher tout déplacement au niveau de la paroi latérale de l'espace latéral, le couvercle présentant une partie de paroi latérale qui est appliquée de manière hermétique contre une surface extérieure de la paroi latérale de l'espace principal.
